# EUROPEAN PATENT APPLICATION

(11) **EP 1 947 835 A1**
(43) Date of publication of application: **23.07.2008**
(21) Application number: 07121257.5
(22) Date of filing: 22.11.2007
(51) Int. Cl.: H04N 1/32

(54) **Fault tolerant printing system**

(30) Priority: 22.01.2007 US 656592
(71) Applicant: Ricoh Company, Ltd., Tokyo 143-8555 (JP)
(72) Inventor: Kim, Seong c/o Ricoh Americas Corporation, West Caldwell, New Jersey 07006 (US); Nuggehalli, Jayasimha c/o Ricoh Americas Corporation, West Caldwell, New Jersey 07006 (US); Wei, Ke c/o Ricoh Americas Corporation, West Caldwell, New Jersey 07006 (US); Katano, Seiichi c/o Ricoh Americas Corporation, West Caldwell, New Jersey 07006 (US)
(74) Representative: Schwabe - Sandmair - Marx

(57) **Abstract**

According to a technique described herein, whenever there are print jobs waiting in a currently idle printing device's queue, the printing device selects, from among those print jobs, the longest-waiting print job that does not require any resources that the printing device cannot currently supply without human intervention. The printing device removes that print job from the queue and prints that print job, even if other print jobs have been waiting longer in the queue. If the queue contains print jobs that the printing device cannot currently print because the printing device currently lacks sufficient resources to print those print jobs completely, then, for each such print job, the printing device di.splays reasons why that print job cannot currently be printed. The reasons may include information that identifies the qualities and/or quantities of the resources that the printing device currently lacks but needs.

## Description

### FIELD OF THE INVENTION

The invention relates to printing devices, and more specifically, to a technique for printing print jobs that are queued behind a particular print job in a printing device when the particular print job cannot currently be printed for lack of required resources at the printing device.

### BACKGROUND OF THE INVENTION

Printing devices, such as printers, copy machines, and multi-function peripherals (MFPs) such as the Ricoh Aficio Color 5560 system, sometimes are capable of storing print jobs for later printing. U.S. Patent Application Serial No. 11/346,479 describes a technique through which a print job may be sent, over a network, from a computer to a printing device and stored on a hard drive within the printing device. Although the print job is stored at the printing device, the print job is not immediately printed at the printing device. Some time after the print job has been stored at the printing device, a user who caused the print job to be sent to the printing device may enter, through a console at the printing device, a username and password combination that is associated with the print job. After the user enters the correct username and password combination at the printing device's console, the user can instruct the printing device to print the stored print job. Such a "locked" printing technique promotes security by preventing sensitive information from being deposited into a printing device's output tray until the user who wanted the information printed is able to be present at the printing device.

Modern printing devices are capable of receiving data for multiple different print jobs (e.g., each print job representing a separate document) and storing the data for each print job in a queue. When a printing device has data for multiple print jobs waiting in that printing device's queue, the printing device typically services the print jobs based on a first-come, first-served scheme. Print jobs that arrived in the queue earlier are usually serviced before print jobs that arrived in the queue later. Because a printing device usually services only one print job at a time, print jobs that are waiting in the queue typically cannot be printed until at least the currently printing print job has finished printing.

Sometimes, though, when a printing device is ready to print a print job that is at the front of the queue, or even while the printing device is printing a print job, the printing device may discover that the printing of that print job cannot currently be completed because the printing device currently lacks some resource that is required to complete the printing of that particular print job. For example, the size of the paper required to print the particular print job might not currently be available in any of the printing device's input trays (the printing device might have run out of that kind of paper). For another example, the color of ink or toner required to print the particular print job might not currently be available (the printing device might have run out of that color of ink or toner). Usually, when a printing device discovers that it lacks a needed resource, the printing device stops printing altogether. The printing device does not resume printing until the needed resource has been made available to the printing device.

This way of handling the lack of a required resource is unfortunate, because other print jobs that are waiting in the printing device's queue might only require resources that the printing device is currently able to supply. For example, even if the printing device has run out of red ink or toner, and therefore cannot complete the printing of a particular print job that requires red ink or toner, many of the other print jobs waiting in the queue might not require any red ink or toner at all; such other print jobs might only require black ink or toner, which the printing device might currently have in ample supply. However, because existing printing devices are designed to cease all printing when a currently printing print job cannot be completed, existing printing devices detrimentally prevent all queued print jobs from printing, even when the printing device currently has the resources required to print those queued print jobs.

Based on the foregoing, there is a need for a technique that allows queued and waiting print jobs, which are, in a printing device's queue, behind another print job whose printing cannot currently be completed, to be printed under circumstances in which the printing device currently has the resources to print those queued and waiting print jobs.

### SUMMARY OF THE INVENTION

According to one embodiment of the invention, whenever a printing device is not currently printing a print job and there are print jobs waiting in that printing device's queue, the printing device selects, from among the print jobs currently waiting in the queue, the longest-waiting print job that does not require any resources that the printing device cannot currently supply without human intervention. The printing device removes that print job from the queue and prints that print job, even if other print jobs have been waiting longer in the queue.

According to one embodiment of the invention, in order to determine whether a currently waiting print job requires any resources that the printing device cannot currently supply without human intervention, the printing device determines the qualities (e.g., paper size, toner/ink color, etc.) and quantities of resources that will be required in order to print that print job completely. If the printing device cannot currently supply, without human intervention, all of the qualities and quantities of resources that will be required in order to print that print job completely, then the printing device does not select that print job to print next.

According to one embodiment of the invention, if the printing device's queue contains one or more print jobs that the printing device cannot currently print because the printing device currently lacks sufficient resources to print those print jobs completely, then, for each such print job, the printing device displays, on a user interface (e.g., a console) that is present on the printing device, both (a) an identifier that identifies that print job, and (b) one or more reasons why that print job cannot currently be printed. For each such print job, the reasons why that print job cannot currently be printed may include information that identifies the qualities and/or quantities of the resources that the printing device currently lacks but needs in order to print that print job completely. The printing device may concurrently display such information for each such print job concurrently (e.g., in a list) on the user interface.

### BRIEF DESCRIPTION OF THE DRAWINGS

Embodiments are illustrated by way of example, and not by way of limitation, in the figures of the accompanying drawings in which like reference numerals refer to similar elements and in which:
FIG. 1 is a block diagram that depicts a system in which an embodiment of the invention may be employed;
FIG. 2 shows a flow diagram that depicts an example technique through which waiting print jobs may be automatically promoted, in a printing device's queue, ahead of one or more print jobs that cannot currently be printed due to current lack of necessary resources, according to an embodiment of the invention;
FIG. 3 illustrates an example of a pending jobs list that may be displayed on the display of a printing device, according to an embodiment of the invention;
FIG. 4 shows a flow diagram that depicts an example technique for displaying multiple queued print jobs and the reasons why each print job cannot currently be printed, according to an embodiment of the invention;
FIG. 5 illustrates an example of a set of print job requirements that may be displayed on the display of a printing device in response to a user's selection of a print job from a list of queued print jobs, according to an embodiment of the invention; and
FIG. 6 is a block diagram that depicts a printing device upon which an embodiment of the invention may be implemented.

### DETAILED DESCRIPTION OF THE INVENTION

In the following description, for the purposes of explanation, specific details are set forth in order to provide a thorough understanding of the invention. However, it will be apparent that the invention may be practiced without these specific details. In some instances, well-known structures and devices are depicted in block diagram form in order to avoid unnecessarily obscuring the invention.

### OVERVIEW

According to techniques described herein, whenever a printing device is not currently printing a print job and there are print jobs waiting in that printing device's queue, the printing device selects, from among the print jobs currently waiting in the queue, the longest-waiting print job that does not require any resources that the printing device cannot currently supply without human intervention. The printing device removes that print job from the queue and prints that print job, even if other print jobs have been waiting longer in the queue.

According to one technique described herein, in order to determine whether a currently waiting print job requires any resources that the printing device cannot currently supply without human intervention, the printing device determines the qualities (e.g., paper size, toner/ink color, etc.) and quantities of resources that will be required in order to print that print job completely. If the printing device cannot currently supply, without human intervention, all of the qualities and quantities of resources that will be required in order to print that print job completely, then the printing device does not select that print job to print next. Thus, according to one technique, the printing device does not begin to print a print job unless the printing device can determine beforehand that the printing device can print the print job completely without human intervention. As a result, when this technique is employed, there never exists an only partially-printed print job whose printing cannot complete without human intervention because the printing device has run out of a required resource while printing that print job.

According to one technique described herein, if the printing device's queue contains one or more print jobs that the printing device cannot currently print because the printing device currently lacks sufficient resources to print those print jobs completely, then, for each such print job, the printing device displays, on a user interface (e.g., a console) that is present on the printing device, both (a) an identifier that identifies that print job, and (b) one or more reasons why that print job cannot currently be printed. For each such print job, the reasons why that print job cannot currently be printed may include information that identifies the qualities and/or quantities of the resources that the printing device currently lacks but needs in order to print that print job completely. If more than one such print job is waiting in the queue, then the printing device may concurrently display such information for each such print job concurrently (e.g., in a list) on the user interface. Potentially, multiple waiting print jobs might require the same lacking resource. As a result, when this technique is employed, users of the printing device can easily determine which resource is needed by most of the waiting print jobs. Thus, users can more quickly supply the printing device with the needed resource which will enable the largest quantity of waiting print jobs to become printable. Additionally, users can more easily determine how much of a particular resource the printing device needs in order to print multiple waiting print jobs.

According to one technique described herein, the printing device's user interface displays the queued and waiting print jobs in the order in which they exist in the queue; initially, print jobs that have been waiting longest in the queue may appear toward the top of a list, while print jobs that have been waiting a least amount of time may appear toward the bottom of the list. According to one technique described herein, the printing device supplies a mechanism (e.g., through the user interface) through which a user can alter the order of the queued and waiting print jobs. Thus, when this technique is employed, users can change the order of queued and waiting print jobs at the printing device so that more urgent print jobs will be located before other print jobs waiting in the queue.

### EXAMPLE PRINTING SYSTEM

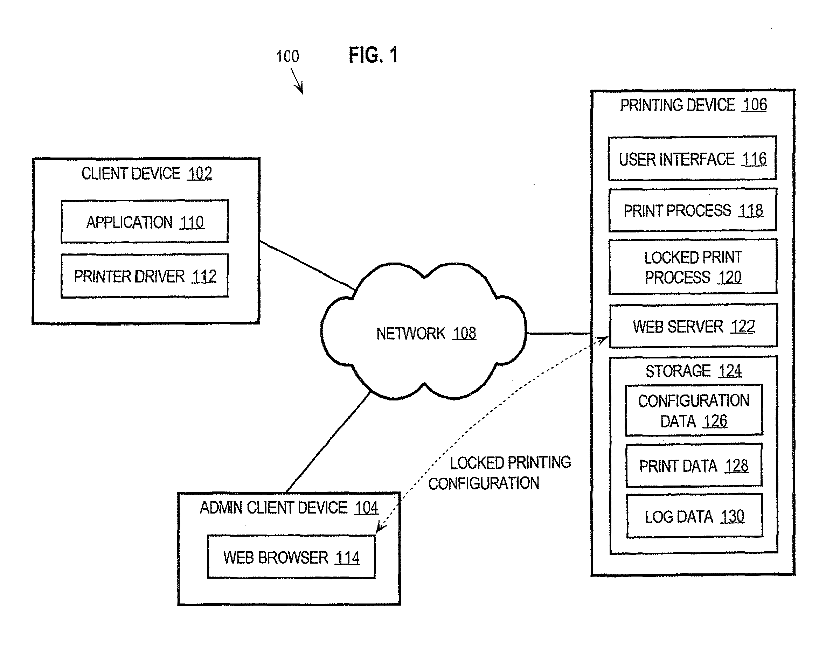

FIG. 1 is a block diagram that depicts a system in which an embodiment of the invention may be employed. System 100 includes a client device 102, an administrative (admin) client device 104 and a printing device 106, communicatively coupled via a network 108. The system illustrated is just one example of a system in which an embodiment of the invention may be employed; other systems may include more, fewer, or different components that those illustrated in FIG. 1.

Client device 102 and admin client device 104 may be implemented by any type of client devices. Example implementations of client device 102 and admin client device 104 include, without limitation, workstations, personal computers, laptop computers, personal digital assistants (PDAs), cellular telephony devices and any type of mobile devices. In the example system depicted in FIG. 1, client device 102 is configured with an application 110 and a printer driver 112. Application 110 may be any type of application process. Examples of application 110 include, without limitation, a word processor, a spreadsheet program and an email client. Printer driver 112 is configured to provide a user interface for a user to specify that locked printing is to be used to print particular print data. Printer driver 112 is also configured to process data from application 110 and to generate print data that is provided to printing device 106 for processing. Thus, application 110 and printer driver 112 operate together to generate and provide print data to printing device 106. Admin client device 104 is configured with a web browser 114 to allow a user, such as an administrator, to configure locked printing functionality for printing device 106, as described in U.S. Patent Application Serial No. 11/346,479. Client device 102 and admin client device 104 may be configured with other mechanisms, processes and functionality, depending upon a particular implementation.

Printing device 106 may be implemented by any type of device that is capable of processing print data received from client device 102 and generate printed versions of electronic documents reflected in the print data. In example system 100, printing device 106 includes a user interface 116, a print process 118, a locked print process 120, a Web server 122 and storage 124. Printing device 106 may be configured with other mechanisms, processes and functionality, depending upon a particular implementation, and the approach described herein for configuring locked printing on a printing device is not limited to any type of printing device 106. For example, printing device 106 may be a multi-function peripheral (MFP) that includes any combination of printing, copying, facsimile and scanning capability, etc.

User interface 116 may be any mechanism and/or medium that provides for the exchange of information between a user and printing device 106. Examples of user interface 116 include, without limitation, a control panel with a display and keypad or keyboard, a cathode ray tube (CRT), a liquid crystal display (LCD), a keyboard, touchpad, mouse, trackball, a microphone and speakers, and any combination thereof. Printing device 106 may be configured to display information on user interface 116 in any number of languages, depending upon a particular implementation.

Print process 118 may be implemented by one or more processes for processing print data received from client device 102 and for generating a printed version of an electronic document reflected in the print data. Print process 118 may be implemented as a resident process on printing device 106. Alternatively, print process 118 may be provided to printing device 106 on a removable media.

Locked print process 120 is a process configured to provide locked print services, as described in U.S. Patent Application Serial No. 11/346,479.

Web server 122 may be implemented by any mechanism or process for generating web pages. The web pages may be any type of web pages, (e.g., HTML), and may include any type of content, depending upon a particular implementation. Examples of web server 122 include, without limitation, an Apache web server.

Storage 124 may be implemented by any type of storage, including volatile and non-volatile storage. Examples of storage 124 include, without limitation, random access memory (RAM) and one or more disks.

User interface 116, print process 118, locked print process 120, web server 122 and storage 124 may be implemented in hardware, software, or any combination of hardware or software, depending upon a particular implementation.

Network 108 may be implemented with any type of medium and/or mechanism that facilitates the wireless exchange of information between client device 102, printing device 106 and admin client device 104. Furthermore, network 108 may use any type of communications protocol and may be secured or unsecured, depending upon the requirements of a particular application.

### AUTOMATIC PRINT JOB PROMOTION

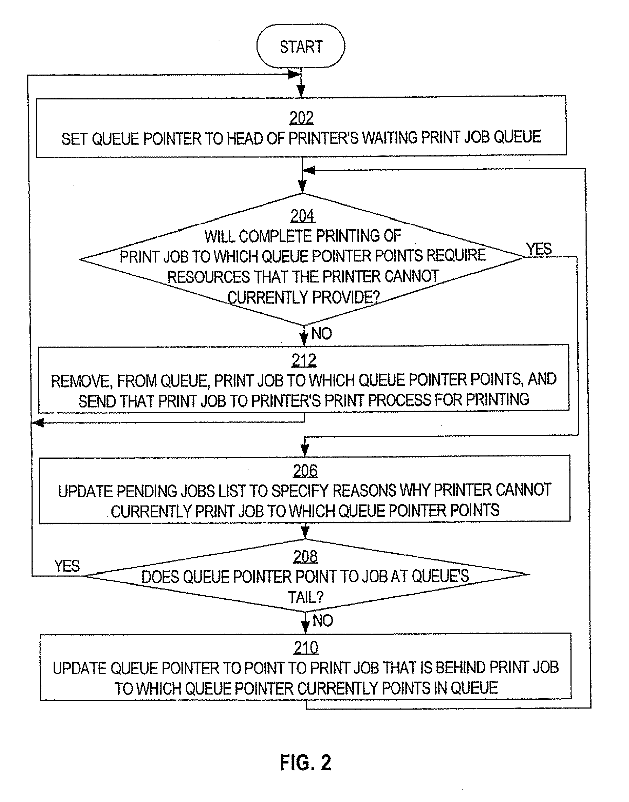

FIG. 2 shows a flow diagram that depicts an example technique through which waiting print jobs may be automatically promoted, in a printing device's queue, ahead of one or more print jobs that cannot currently be printed due to current lack of necessary resources, according to an embodiment of the invention. The technique may be performed within the system depicted in FIG. 2, for example. The technique illustrated in just one example. Other techniques, according to various embodiments of the invention, may comprise additional or fewer steps that those illustrated.

Block 202 assumes that one or more print jobs are waiting in a printing device's queue and that the printing device is not currently printing any print job. If the printing device's queue is currently empty, or if the printing device is currently printing a print job, then the printing device may perform other operations until a print job arrives in the queue. In one embodiment of the invention, print jobs that printing device 106 receives (e.g., from client device 102) are automatically placed at the tail of the printing device's queue.

In block 202, a queue pointer is set to the head of the printing device's queue. The queue contains currently waiting print jobs. For example, the queue pointer may be stored in the memory of printing device 106, and initially may point to the print job that has been waiting in the queue for the longest amount of time. Print jobs in the print queue may be stored in the printing device's volatile memory and/or on persistent storage such as a hard disk drive that is located within the printing device.

In block 204, a determination is made as to whether the complete printing of the print job to which the queue pointer points will require resources that are of a quality and/or quantity that the printing device cannot currently provide without human intervention. For example, printing device 106 may make such a determination after completing the printing of another print job. If the complete printing of the print job to which the queue pointer points will require resources that are of a quality and/or quantity that the printing device cannot currently provide without human intervention, then control passes to block 206. Otherwise, control passes to block 212.

Block 206 may be reached in response to the printing device determining that the printing device currently has insufficient resources to print, completely, the print job to which the queue pointer points. For example, printing device 106 may determine that the print job to which the queue pointer points requires A4 paper but that printing device 106 does not currently have any A4 paper. Other possible reasons why printing device 106 might determine that the print job to which the queue pointer points cannot currently be printed completely might include: (1) insufficient paper to print all of the pages of the print job, (2) insufficient paper of the required paper size, (3) insufficient media of the required media type, (4) insufficient number of sheets in the specified input tray, (5) insufficient toner/ink of a required color, (6) unrecognized print language, (7) insufficient number of staples to perform a required stapling operation, (8) specified output tray is full, etc. In one embodiment of the invention, the printing device determines a print job's required resources by parsing a header within the print job's data. In one embodiment of the invention, the printing device determines the printing device's currently available resources by querying a management information base (MIB) that is stored in the printing device's memory. In one embodiment of the invention, multiple paper level sensors in each of the printing device's input trays enable the printing device to determine at least a minimum amount of paper or other media that each input tray currently contains.

In block 206, a list of the currently waiting jobs is automatically updated to specify the reason(s) why the print job to which the queue pointer points cannot currently be printed completely without human intervention. Thus, at any given time, the list indicates, for each print job in the queue, reason(s) why that print job cannot currently be printed completely without human intervention. In one embodiment of the invention, the list, with the reason(s) why various print jobs in the list cannot currently be printed completely without human intervention, is stored in the printing device's memory. In one embodiment of the invention, the printing device never begins to print any print job unless the printing device has sufficient resources to print that print job completely (i.e., not just partially).

In one embodiment of the invention, this list is automatically updated whenever a resource (e.g., toner, paper, media, program code, etc.) is added to the printing device (typically through human intervention). The addition of a resource to the printing device might remedy one or more reasons that one or more print jobs in the queue were previously unable to print completely. Therefore, if the reason why a print job was unable to print completely is remedied by the addition of a resource to the printing device, then, in one embodiment of the invention, the list is automatically updated to remove that reason from the list. In any case, control passes from block 206 to block 208.

In block 208, a determination is made as to whether the queue pointer points to the print job that is at the tail of the print queue (i.e., the print job that is behind all other print jobs in the queue). If the queue pointer points to the print job that is at the tail of the queue, then control passes back to block 202. Otherwise, control passes to block 210.

In block 210, the queue pointer is updated so that the queue pointer will point to the print job that is, in the queue, immediately behind the print job to which the queue pointer currently points. For example, if the queue pointer currently points to the first print job in the queue, then the queue pointer is updated to point to the second job in the queue. Control then passes back to block 204.

Alternatively, in block 212, the print job to which the queue pointer points is removed from the queue and provided to the printing device's print process for printing. For example, printing device 106 may remove, from the queue, the print job to which the queue pointer points, and provide that print job to print process 118, which causes the print job to begin printing. Because the printing device currently has all of the resources that are required to print the print job completely without human intervention, the printing device essentially promotes the print job ahead of the other print jobs that were ahead of that print job in the queue by selecting that print job for printing. Control then passes back to block 202.

### DISPLAYING REASONS WHY PRINT JOBS CANNOT PRINT

As is discussed above, in one embodiment of the invention, when a print job in the queue cannot currently be printed completely without human intervention due to the printing device lacking resources needed to completely print the print job, the reasons why that print job cannot be printed may be determined automatically and stored in association with that print job. Thus, for each print job in the queue, that print job may be associated with one or more reasons why that print job cannot print.

In one embodiment of the invention, the printing device displays, via a user interface on the printing device (e.g., a console), a list of each of the print jobs that is currently waiting in the queue, and, next to each such print job, a set of reasons (if any) that the printing device cannot currently print the print job. The list typically displays the print jobs in the same order in which those jobs exist in the queue, with the print job at the head of the queue being listed first in the list, and the print job at the tail of the queue being listed last in the list. Thus, a user may determine statuses of the waiting print jobs using the printing device's display.

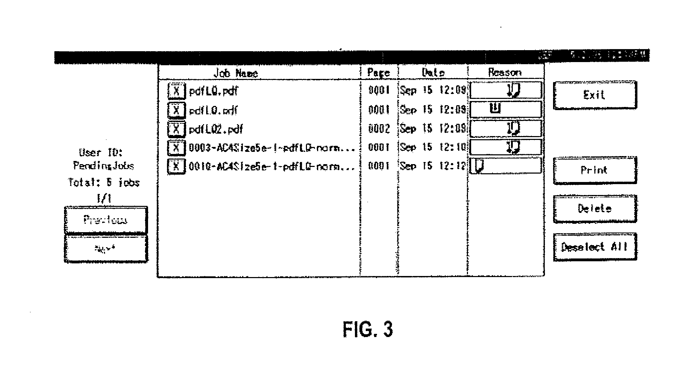

FIG. 3 illustrates an example of a pending jobs list that may be displayed on the display of a printing device, according to an embodiment of the invention. As is shown in FIG. 3, the list may take the form of a multi-column table. The table illustrated comprises a column for indicating a print job name, a column for indicating a number of pages in a print job, a column for indicating date and time at which a print job was received by the printing device, and a column for indicating one or more reasons why a print job cannot currently be printed completely without human intervention. Thus, the table may indicate the statuses of multiple pending print jobs simultaneously, in one display.

In one embodiment of the invention, if a print job cannot currently be printed without human intervention, then at least one of the columns indicates one or more reasons why that print job cannot currently be printed. In one embodiment of the invention, each different type of reason that a print job cannot currently be printed is represented by a different icon that may be displayed in this column. For example, one type of icon might indicate that there is a paper size mismatch; this type of icon indicates that a size of paper required to print the print job is not currently available to the printing device. For another example, one type of icon might indicate that there is a tray mismatch; this type of icon might indicate, among other problems, that a specified input tray does not contain sufficient media to allow the print job to be printed completely. For another example, one type of icon might indicate that there is a media mismatch. For another example, one type of icon might indicate that the printing device does not have a sufficient amount of staples to perform a stapling operation that is specified by the print job. If there are multiple reasons why a particular print job cannot currently be printed completely without human intervention, then the column may display multiple different icons on the row for that print job--one icon for each different reason.

Although reasons may be indicated by simple icons, in one embodiment of the invention, additional details may be presented in the display. For example, the display may indicate a color of ink or toner that needs to be supplied in order to make a particular print job printable. For another example, the display may indicate a number of sheets of a particular kind of media that need to be added to a particular input tray in order to make a particular print job printable.

Thus, in one embodiment of the invention, the display gives the user an overall idea of which print jobs cannot currently be printed completely and why those print jobs cannot currently be printed completely-even when the queue contains multiple print jobs that cannot currently be printed. This information can help a user to prioritize print jobs so that print jobs with problems that are more easily remedied than others can be promoted in the print queue, as is discussed below.

In one embodiment of the invention, the printing device includes a mechanism (e.g., a keypad or touch-sensitive screen) through which a user of the printing device can select a particular print job from the displayed list and move that print job to a different position in the list, thus changing the position of that print job in the queue relative to other print jobs in the queue. Thus, using this mechanism, a user can manually promote print jobs ahead of other print jobs. This may be especially useful when a print job at the tail of the queue requires missing resources that are more easily supplied, at the moment, than missing resources that are required by other print jobs that are ahead of that print job in the queue. In one embodiment, a user also can use this mechanism to remove a selected print job from the queue.

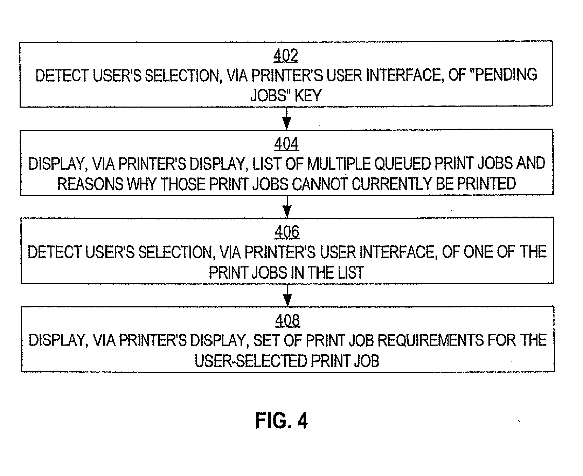

FIG. 4 shows a flow diagram that depicts an example technique for displaying multiple queued print jobs and the reasons why each print job cannot currently be printed, according to an embodiment of the invention.

In block 402, a user's selection, via a printing device's user interface, of a "pending jobs" key is detected. For example, printing device 106 may detect such a selection.

In block 404, in response to detecting the selection, a list of multiple queued print jobs is displayed via the printing device's display (which may be combined with the user interface). Along with each queued print job, the list indicates one or more reasons why that print job cannot currently be printed completely without human intervention. The reasons indicated may specify, for each print job, resources that the printing device requires in order to print that print job completely. The resources needed to print one print job may differ from the resources needed to print another print job. If the printing device does not lack any of the resources needed to print a particular queued print job completely, then no reasons are listed in association with that print job.

In block 406, a user's selection, via the printing device's user interface, of one of the print jobs in the list is detected. For example, printing device 106 may detect such a selection.

In block 408, in response to the user's selection of a print job from the list, a set of print job requirements for the selected print job is displayed via the printing device's display (which may be combined with the user interface). For example, the set of print job requirements may indicate (a) a paper size that the selected print job requires, (b) a specified input tray from which media is to be drawn for the printing of the selected print job, (c) a specified media type onto which the content of the selected print job is to be printed, etc. Using such information, a user can determine, with specificity, all of the resources that the selected print job will require in order to allow the printing device to print the selected print job completely.

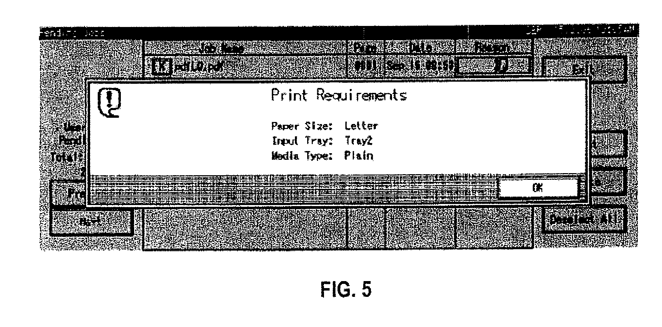

FIG. 5 illustrates an example of a set of print job requirements that may be displayed on the display of a printing device in response to a user's selection of a print job from a list of queued print jobs, according to an embodiment of the invention. The displayed set of print job requirements indicates various specified characteristics of the selected print job, including paper size, input tray identity, and media type. These characteristics may be obtained automatically from a header of the print job data that is stored on a hard disk drive of the printing device, for example.

### ADDITIONAL FEATURES

In one embodiment of the invention, instead of storing a print job on a hard disk drive of a printing device when the printing device determines that the printing device currently lacks sufficient resources to print the print job, the printing device forwards that print job (e.g., over a network) to another printing device that currently has sufficient resources to print the print job. In such an embodiment of the invention, a user who sent the print job to the initial printing device may be notified automatically of the identity and location of the printing device to which the print job was automatically forwarded, so that the user knows where to go to pick up the printed print job. Such a notification may be sent via e-mail to the user's registered e-mail account, via a driver pop-up dialog, via a printed (on physical media) notification on the printing device to which the print job was originally sent, via a displayed (e.g., on an LCD or CRT screen) message on a display of the printing device to which the print job was originally sent, via a text message send to the user's registered mobile device (e.g., mobile phone or PDA), etc.

In one embodiment of the invention, when a user instructs a printing device to print a selected print job that is in the list of queued print jobs that is displayed to the user (as described above), the printing device determines whether the printing device currently has all of the resources needed to service the print job completely. If the printing device lacks any resource, then the printing device asks the user for permission to service the print job with a different resource substituted for the currently lacked resource. If the user approves, then the printing device services the print job using the substitute resource in place of the resource which the printing device currently lacks. For example, a print job requires A3 paper, and the printing device currently has A4 paper but not A3 paper, then the printing device may ask the user whether the user will permit the printing device to print the print job using A4 paper instead of A3 paper. If the user indicates that this is acceptable, then the printing device prints the print job using A4 paper instead of A3 paper.

As is mentioned above, the printing device may automatically determine whether a sufficient amount of media to print a print job exists in a specified input tray using a plurality of paper level sensors that are positioned in the input tray.

### IMPLEMENTATION MECHANISMS

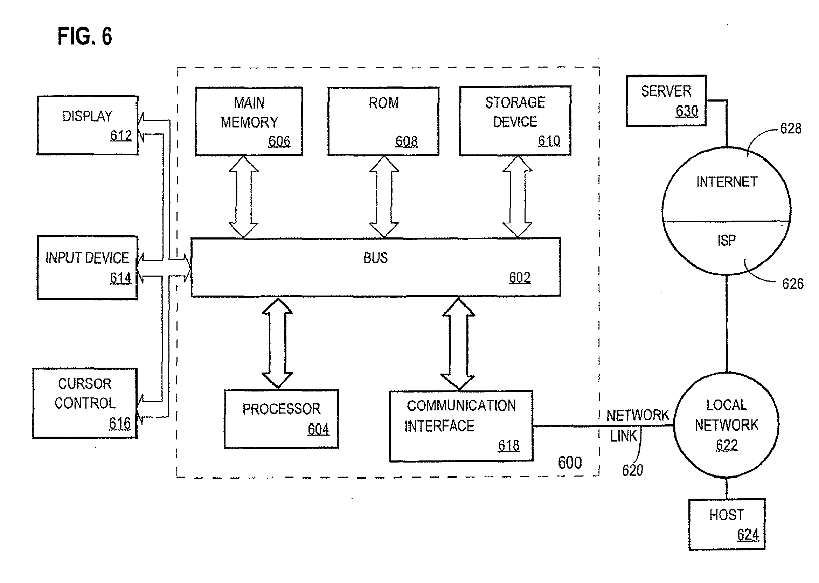

FIG. 6 is a block diagram that depicts a computer system 600 upon which an embodiment of the invention may be implemented. Computer system 600 includes a bus 602 or other communication mechanism for communicating information, and a processor 604 coupled with bus 602 for processing information. Computer system 600 also includes a main memory 606, such as a random access memory (RAM) or other dynamic storage device, coupled to bus 602 for storing information and instructions to be executed by processor 604. Main memory 606 also may be used for storing temporary variables or other intermediate information during execution of instructions to be executed by processor 604. Computer system 600 further includes a read only memory (ROM) 608 or other static storage device coupled to bus 602 for storing static information and instructions for processor 604. A storage device 610, such as a magnetic disk or optical disk, is provided and coupled to bus 602 for storing information and instructions.

Computer system 600 may be coupled via bus 602 to a display 612, such as a liquid crystal display (LCD), for displaying information to a user. An input device 614, including alphanumeric and other keys, is coupled to bus 602 for communicating information and command selections to processor 604. Another type of user input device is cursor control 616, such as a mouse, trackball, stylus, or cursor direction keys for communicating direction information and command selections to processor 604 and for controlling cursor movement on display 612. This input device typically has two degrees of freedom in two axes, a first axis (e.g., x) and a second axis (e.g., y), that allows the device to specify positions in a plane.

The invention is related to the use of computer system 600 in a wireless communications architecture. According to one embodiment of the invention, wireless communications are provided by computer system 600 in response to processor 604 executing one or more sequences of one or more instructions contained in main memory 606. Such instructions may be read into main memory 606 from another computer-readable medium, such as storage device 610. Execution of the sequences of instructions contained in main memory 606 causes processor 604 to perform the process steps described herein. One or more processors in a multi-processing arrangement may also be employed to execute the sequences of instructions contained in main memory 606. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 604 for execution. Such a medium may take many forms, including but not limited to, non-volatile media, volatile media, and transmission media. Non-volatile media includes, for example, optical or magnetic disks, such as storage device 610. Volatile media includes dynamic memory, such as main memory 606. Transmission media includes coaxial cables, copper wire and fiber optics, including the wires that comprise bus 602. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 604 for execution. For example, the instructions may initially be carried on a magnetic disk of a remote computer. The remote computer can load the instructions into its dynamic memory and send the instructions over a telephone line using a modem. A modem local to computer system 600 can receive the data on the telephone line and use an infrared transmitter to convert the data to an infrared signal. An infrared detector coupled to bus 602 can receive the data carried in the infrared signal and place the data on bus 602. Bus 602 carries the data to main memory 606, from which processor 604 retrieves and executes the instructions. The instructions received by main memory 606 may optionally be stored on storage device 610 either before or after execution by processor 604.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card or a modem to provide a data communication connection to a corresponding type of telephone line. As another example, communication interface 618 may be a LAN card to provide a data communication connection to a compatible LAN. Wireless links may also be implemented. In any such implementation, communication interface 618 sends and receives electrical, electromagnetic or optical signals that carry digital data streams representing various types of information.

Network link 620 typically provides data communication through one or more networks to other data devices. For example, network link 620 may provide a connection through local network 622 to a host computer 624 or to data equipment operated by an Internet Service Provider (ISP) 626. ISP 626 in turn provides data communication services through the worldwide packet data communication network now commonly referred to as the Internet 628. Local network 622 and Internet 628 both use electrical, electromagnetic or optical signals that carry digital data streams. The signals through the various networks and the signals on network link 620 and through communication interface 618, which carry the digital data to and from computer system 600, are example forms of carrier waves transporting the information.

Computer system 600 can send messages and receive data, including program code, through the network(s), network link 620 and communication interface 618. In the Internet example, a server 660 might transmit a requested code for an application program through Internet 628, ISP 626, local network 622 and communication interface 618. In accordance with the invention, one such downloaded application provides for configuring a monitoring system to monitor selected network elements as described herein. Processor 604 may execute the received code as it is received and/or stored in storage device 610 or other non-volatile storage for later execution. In this manner, computer system 600 may obtain application code in the form of a carrier wave.

In the foregoing specification, specific embodiments of the invention have been described. However, various modifications and changes may be made to such embodiments of the invention without departing from the broader spirit and scope of the invention. The specification and drawings are, accordingly, to be regarded in an illustrative rather than a restrictive sense.

## Claims

1. A computer-implemented method for fault-tolerant printing that involves storing a plurality of print jobs on a printing device, wherein two or more of the print jobs each require one or more resources that the printing device cannot currently provide, and placing each print job of the plurality of print jobs into a queue, the method being **characterized by** comprising the steps of:
displaying, on a display of the printing device, a list that includes (a) an identity of each print job in the queue, and (b) for each print job that cannot currently be printed, an indication of one or more reasons why that print job cannot currently be printed (202, 204, 206);
automatically selecting, from the queue, a particular print job that is closest to a head of the queue among print jobs whose complete printing does not require any resources that the printing device cannot currently provide (202, 204, 212); and
printing the particular print job at the printing device before printing one or more other print jobs that (1) are ahead of the particular print job in the queue and (2) require one or more resources that the printing device cannot currently provide.

2. The method of Claim 1, wherein selecting the particular print job further comprises:
beginning at the head of the queue and working toward the tail of the queue, determining whether print jobs in the queue require any resources that the printing device cannot currently provide; and
in response to locating, in the queue, a certain print job that does not require any resources that the printing device cannot currently provide, selecting the certain print job as the particular print job even though one or more other print jobs are ahead of the certain print job in the queue.

3. The method of Claim 1, wherein displaying the list further comprises:
displaying an identity of a first print job and an indication of one or more first reasons why the first print job cannot currently be printed by the printing device;
displaying an identity of a second print job and an indication of one or more second reasons why the second print job cannot currently be printed at the printing device;
wherein at least one of the one or more first reasons is not among the one or more second reasons.

4. The method of Claim 1, wherein displaying the list comprises displaying the list entirely, including identities of each of the print jobs in the queue, simultaneously on one screen.

5. The method of Claim 1, wherein displaying the list further comprises:
displaying an identity of a first print job and an indication of one or more first resources that (a) are required to print the first print job completely and (b) the printing device cannot currently provide without human intervention;
displaying an identity of a second print job and an indication of one or more second resources that (a) are required to print the second print job completely and (b) the printing device cannot currently provide without human intervention;
wherein the one or more first resources differ from the one or more second resources.

6. The method of Claim 1, wherein displaying the list further comprises:
for each queued print job that cannot currently be printed at the printing device because the printing device lacks sufficient resources to print that queued print job completely, displaying, in the list, one or more icons in association with that queued print job;
wherein each icon of the one or more icons indicates a different type of reason why a print job cannot currently be printed at the printing device without human intervention.

7. The method of Claim 1, wherein displaying the list further comprises:
for each queued print job that cannot currently be printed at the printing device because the printing device lacks sufficient resources to print that queued print job completely, displaying, in the list, one or more icons in association with that queued print job;
wherein each icon of the one or more icons indicates a different type of reason why a print job cannot currently be printed at the printing device without human intervention.

8. The method of Claim 1, wherein displaying the list further comprises:
displaying two or more icons in association with an identity of at least one queued print job;
wherein each icon of the two or more icons indicates a different type of reason why said at least one queue print job cannot currently be printed at the printing device without human intervention.

9. The method of Claim 1, further comprising:
receiving, through a user interface of the printing device, user input that indicates selection of a selected print job from the list; and
in response to receiving the user input, displaying, at the printing device, one or more resources that the selected print job requires in order to be printed completely.

10. The method of Claim 1, further comprising:
receiving user input through a user interface of the printing device;
in response to receiving the user input, moving a user-selected print job from one position in the queue to another position in the queue; and
updating a display of the list to indicate a revised ordering of print jobs in the queue after said moving has been performed.

11. The method of Claim 1, further comprising:
prior to routing a first print job to a print process of the printing device, automatically determining, at the printing device, whether the printing device currently has a sufficient quality and quantity of resources needed to print the first print job completely without human intervention; and
in response to determining that the printing device does not currently have a sufficient quality and quantity of resources needed to print the first print job completely without human intervention, preventing all portions of the first print job from being printed at the printing device until the printing device has been provided with a sufficient quality and quantity of resources needed to print the first job completely.

12. The method of Claim 1, wherein the one or more other print jobs that are ahead of the particular print job in the queue require one or more consumable resources that the printing device currently lacks.

13. A computer-readable medium carrying one or more sequences of instructions for printing a remotely stored print job, storing a plurality of print jobs on a printing device, two or more of the print jobs each requiring one or more resources that the printing device cannot currently provide, and placing each print job of the plurality of print jobs into a queue, wherein execution of the one or more sequences of instructions by one or more processors causes the one or more processors to perform one or more processes **characterized by** comprising the steps of:
displaying, on a display of the printing device, a list that includes (a) an identity of each print job in the queue, and (b) for each print job that cannot currently be printed, an indication of one or more reasons why that print job cannot currently be printed (202, 204, 206);
automatically selecting, from the queue, a particular print job that is closest to a head of the queue among print jobs whose complete printing does not require any resources that the printing device cannot currently provide (202, 204, 212); and
printing the particular print job at the printing device before printing one or more other print jobs that (1) are ahead of the particular print job in the queue and (2) require one or more resources that the printing device cannot currently provide.
